# EUROPÄISCHE PATENTANMELDUNG

(11) **EP 1 121 858 A2**
(43) Veröffentlichungstag der Anmeldung: **08.08.2001**
(21) Anmeldenummer: 01101304.2
(22) Anmeldetag: 20.01.2001
(51) Int. Cl.: A01N 43/42, A01N 65/00, B27K 3/38

(54) **Mittel zur Abwehr tierischer Frassaktivitäten**

(30) Priorität: 04.02.2000 DE 10005081
(71) Anmelder: Horn, Gert, Dipl.-Ing. agr., 06179 Zappendorf (DE); Müller, Michael, Prof. Dr., 15806 Zossen (DE)
(72) Erfinder: Horn, Gert, Dipl.-Ing. agr., 06179 Zappendorf (DE); Müller, Michael, Prof. Dr., 15806 Zossen (DE)
(74) Vertreter: Schinke, Herbert, Dr. Dr., Patentanwaltskanzlei

(57) **Zusammenfassung**

Die Erfindung betrifft ein Mittel zum Schutz vor Fraßschäden, die durch Nager und andere pflanzenfressende Säugetiere, Vögel und Insekten verursacht werden, für die Anwendungsbereiche Forst- bzw. Pflanzenschutz sowie Holz- und Bautenschutz.

Die Mittel enthalten Chinolinderivate der 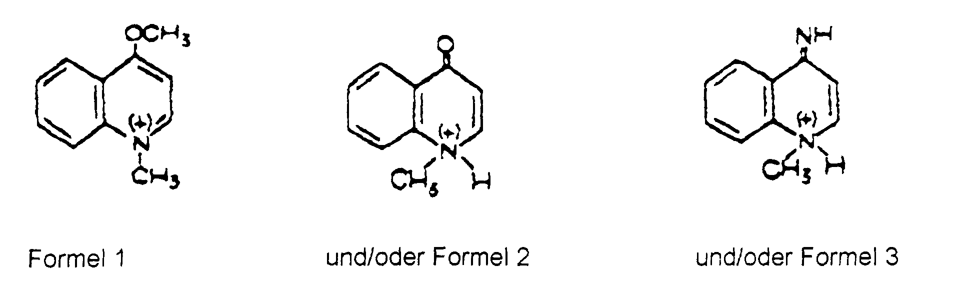 mit herkömmlichen Formulierungshilfsstoffen.

Sie können aus den Früchten von Kugeldistelarten (Echinops spp.) gewonnen werden.

Die Mittel werden in Form wässriger Lösungen, Emulsionen oder Suspensionen oder in Form von vermahlenen Früchten oder Rückstandsmehlen von Kugeldistelarten eingesetzt.

## Beschreibung

Die Erfindung beinhaltet ein Mittel zur Abwehr von tierischen Fraßaktivitäten, insbesondere von Nagern und anderen pflanzenfressenden Säugetieren, Vögeln und Insekten, insbesondere im Forst- bzw. Pflanzenschutz, aber auch im Holz- und Bautenschutz.

Grundlage bekannter Mittel in Form von Repellents sind geruchs- bzw. geschmacksintensive organische Stoffe, die durch entsprechende Lösungsmittel in die anwendungsbereite Form gebracht werden müssen. Diese Formulierungen weisen vielfach phytotoxische Nebenwirkungen auf. Freiwerdende Lösungsmitteldämpfe wirken ebenfalls nachteilig.

Eine Weiterentwicklung stellen Präparate dar, welche die Bindeeigenschaften von Latex nutzen. Dieses Bindemittel ließ auch die Verwendung von anorganischen Bestandteilen, wie Quarzsand, in Wildverbissmitteln zu. Im Rahmen von jüngsten Entwicklungen zur Nutzung von Stärkeextrudaten als Dämmstoff werden silikatische Bindemittel (Wasserglas) verwendet, die auch einen Schutz vor Nagern gewährleisten sollen. Untersuchungen zeigen aber, dass "verkieselte" Oberflächen nur kurzfristig Schutz vor Nageaktivitäten und Fraß bieten.

Es bestand deshalb die Aufgabe, ein ökologisch geeignetes und dennoch wirksames Mittel zur Abwehr tierischer Fraßaktivitäten zu finden und entwickeln.

Es wurde gefunden, daß ein solches Mittel in Früchten von Kugeldistelarten (Echinops spp.), die künftig als Öl- bzw. Rohstoffpflanzen genutzt werden sollen, in Größenordnungen bis 2 % in den Früchten enthalten ist. Es sind wasserlösliche Chinolinderivate, welche auf einfache Weise auch als Koppelprodukt zur Ölgewinnung, gewonnen werden können.

Das bittere Prinzip der in den Früchten enthaltenen Chinoline lässt trotz hohen Nährwertes (hoher Fett- und Eiweißgehalt) keine Aufnahme durch Nager und kernbeißende Vögel zu. An Früchten parasitierende Insekten, welche sonst bei der Familie der Korbblütler sehr häufig anzutreffen sind, konnten ebenfalls nicht festgestellt werden.

Diese Chinolinderivate sind an sich bekannt. Es liegen Veröffentlichungen zu deren Isolation und Identifikation vor. Bekannt sind auch die pharmazeutische Nutzung von Echinopsin (Formel 2) als Neurostimulator und Extraktionsverfahren zu dessen Gewinnung (DE-OS 1 695 985, US 1 146 371). Neu und überraschend war aber die Wirkung zur Abwehr tierischer Fraßaktivitäten.

Beansprucht wird deshalb ein Mittel zur Abwehr tierischer Fraßaktivitäten, das Chinolinderivate der Formel 1 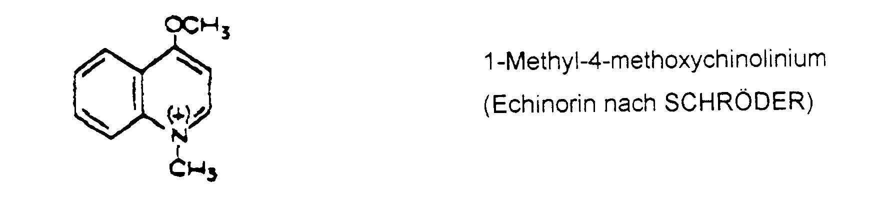 und/oder der Formel 2 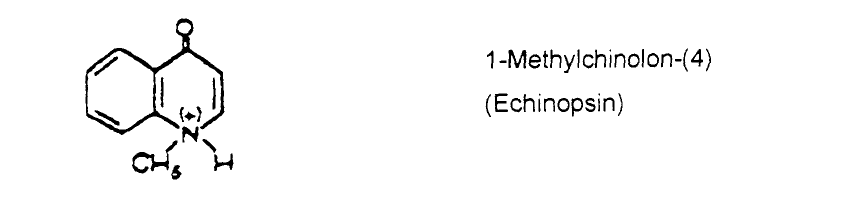 und/oder der Formel 3 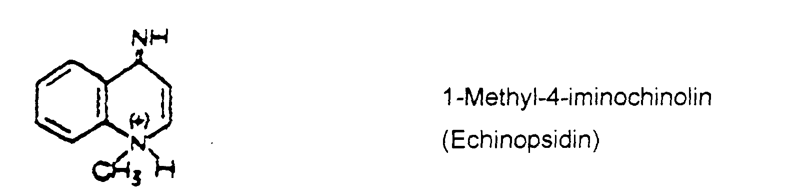 in Verbindung mit herkömmlichen Formulierungshilfsstoffen enthält.

Sie können durch Extraktion mit Wasser, aber auch anderen geeigneten Lösungsmitteln, aus Früchten von Kugeldistelarten gewonnen werden.

Vorzugsweise besteht das Mittel aus 0,5 bis 20 Gew.% Chinolinderivaten und 99,5 bis 80 Gew.% Formulierungshilfsstoffen.

Gegenstand der Erfindung ist speziell die Verwendung von Mitteln, die Chinolinderivate der Formel 1 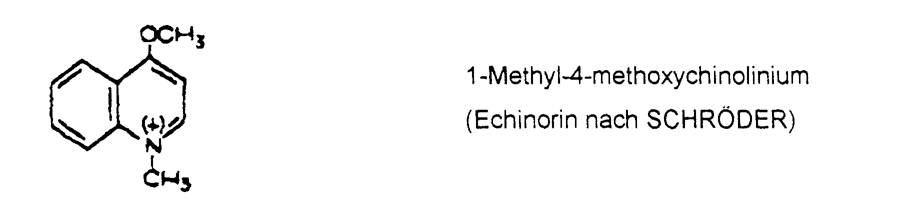 und/oder der Formel 2 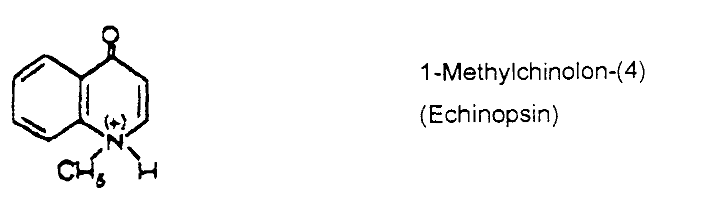 und/oder der Formel 3 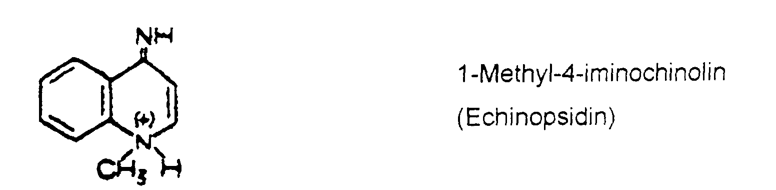 enthalten, zur Abwehr tierischer Fraßaktivitäten.

Vorzugsweise werden die Mittel, die Chinolinderivate enthalten, in Form wässriger Lösungen, Emulsionen oder Suspensionen eingesetzt.

Es besteht auch die Möglichkeit der Nutzung als Fraßabwehrmittel in Form von vermahlenen Früchten oder Rückstandsmehlen, wie von Presskuchen oder Extraktionsschroten nach der Ölgewinnung.

Das Mittel kann in unterschiedlicher, den jeweiligen Bedürfnissen angepasster, herkömmlicher Formulierung oberflächlich aufgebracht oder auch eingebracht werden. Ebenfalls sind Kombinationen mit anderen Wirkprinzipien sehr einfach möglich.

Es können die an sich bekannten Formulierungshilfsstoffe eingesetzt werden, wie oberflächenaktive Substanzen, Träger- und sonstige Hilfsstoffe.

Als vorteilhaft sind das bestehende breite Anwendungspotential und die Wasserlöslichkeit des erfindungsgemäßen Mittels sowie die Möglichkeit, es aus nachwachsenden Rohstoffen zu gewinnen, hervorzuheben.

Besondes geeignet ist das Mittel zum Schutz von Gehölzpflanzungen vor Tiefraß.

### Beispiel

Die Wirksamkeit des Mittels soll an Hand eines Laborexperimentes belegt werden.

In einem Experiment wurde an je vier männlichen und weiblichen Hausmäusen (Mus musculus) die Aufnahme von Futterkuchen aus Roggenmehl mit Zumischung von Fruchtmehlen bitterstoffhaltiger Pflanzenarten bei gleichzeitiger Darreichung von reinen Roggenmehl-Futterkuchen untersucht. Die Bewertung der Aufnahme erfolgte durch tägliche Wägung der Futterkuchen.

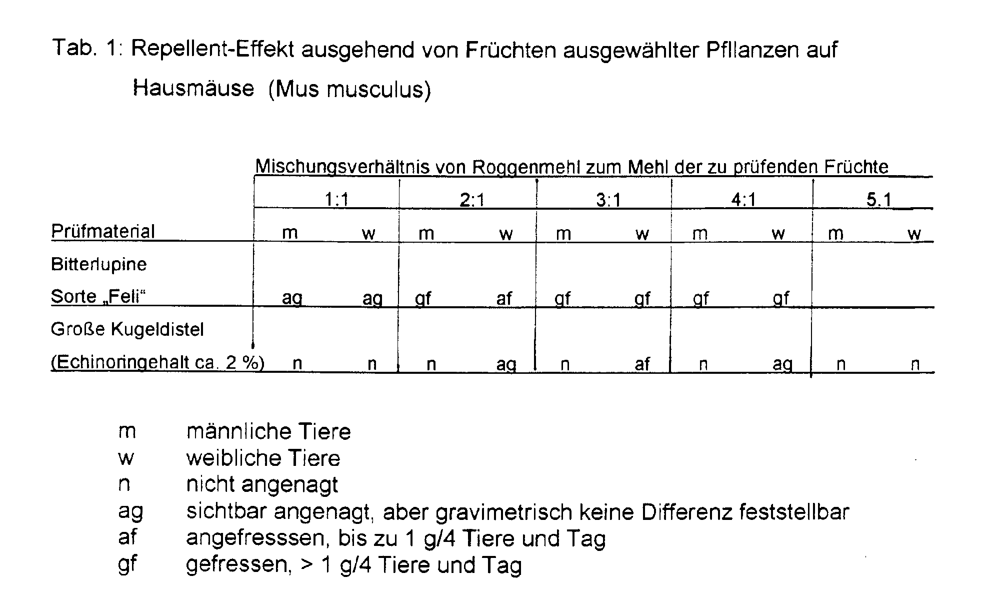

Die Variante Bitterlupine wurde als Vergleichsbeispiel gewählt.

Angemerkt sei, dass die Bewertungsstufe "angefressen" mit einer Differenz von < 1g/4 Tiere und Tag gegenüber einer mittleren täglichen Roggenkuchenaufnahme von x = 25,2 g/4 Tiere und Tag ein bloßes Annagen ― ohne Aufnahme - einschließt, da stark zerkleinerte Kuchenbestandteile nicht aufgefunden werden konnten und so bei der Auswaage nicht enthalten waren.

## Patentansprüche

1. Mittel zur Abwehr tierischer Fraßaktivitäten, dadurch gekennzeichnet, dass es Chinolinderivate der Formel 1 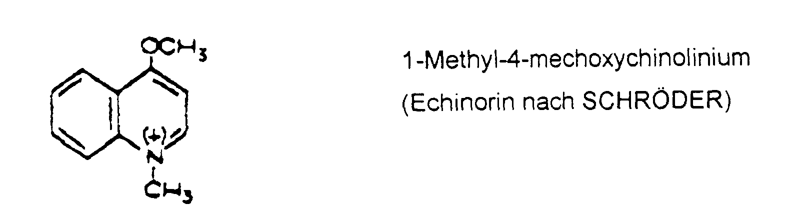 und/oder der Formel 2 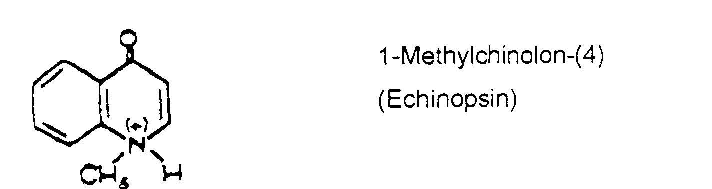 und/oder der Formel 3 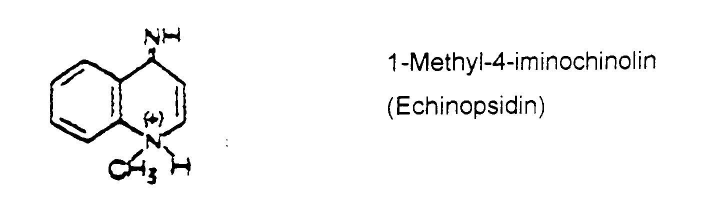 in Verbindung mit herkömmlichen Formulierungshilfsstoffen enthält.

2. Mittel nach Anspruch 1, dadurch gekennzeichnet, daß es aus 0,5 bis 20 Gew.% Chinolinderivaten und
99,5 bis 80 Gew.% Formulierungshilfsstoffen besteht.

3. Verwendung von Mitteln, die Chinolinderivate der Formel 1 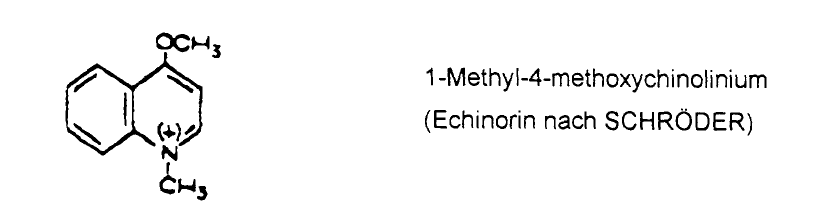 und/oder der Formel 2 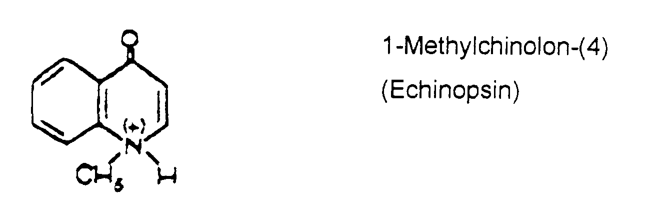 und/oder der Formel 3 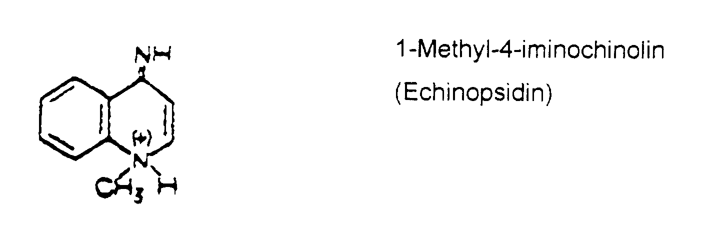 enthalten, zur Abwehr tierischer Fraßaktivitäten.

4. Verwendung von Mitteln, die Chinolinderivate enthalten, nach Anspruch 3,
dadurch gekennzeichnet, dass sie in Form wässriger Lösungen, Emulsionen oder Suspensionen eingesetzt werden.

5. Verwendung von Mitteln, die Chinolinderivate enthalten, nach Anspruch 3,
dadurch gekennzeichnet, dass sie in Form von vermahlenen Früchten oder Rückstandsmehlen von Kugeldistelarten (Echinops spp.) eingesetzt werden.
